(19) Europäisches Patentamt
European Patent Office
Office européen des brevets

(11) **EP 4 075 548 B1**

(12) **EUROPEAN PATENT SPECIFICATION**

(45) Date of publication and mention
of the grant of the patent:
**19.02.2025 Bulletin 2025/08**

(21) Application number: **20961118.5**

(22) Date of filing: **12.11.2020**

(51) International Patent Classification (IPC):
*H01M 4/38* (2006.01)      *C01B 33/027* (2006.01)
*C01B 33/32* (2006.01)      *C01B 33/113* (2006.01)
*H01M 4/04* (2006.01)      *H01M 4/134* (2010.01)
*H01M 4/1395* (2010.01)      *H01M 4/36* (2006.01)
*H01M 4/62* (2006.01)      *H01M 10/052* (2010.01)
*H01M 10/0525* (2010.01)      *H01M 4/02* (2006.01)

(52) Cooperative Patent Classification (CPC):
**C01B 33/32; C01B 33/027; C01B 33/113;
H01M 4/0416; H01M 4/0471; H01M 4/134;
H01M 4/1395; H01M 4/36; H01M 4/364;
H01M 4/366; H01M 4/38; H01M 4/386; H01M 4/62;
H01M 4/625; H01M 10/052;** (Cont.)

(86) International application number:
**PCT/CN2020/128474**

(87) International publication number:
**WO 2022/099561 (19.05.2022 Gazette 2022/20)**

(54) **SILICON-BASED MATERIAL AND SECONDARY BATTERY, BATTERY MODULE, BATTERY PACK AND APPARATUS RELATED THERETO**

MATERIAL AUF SILIZIUMBASIS UND SEKUNDÄRBATTERIE, BATTERIEMODUL, BATTERIEPACK UND DAZUGEHÖRIGES GERÄT

MATÉRIAU À BASE DE SILICIUM ET BATTERIE SECONDAIRE, MODULE DE BATTERIE, BLOC-BATTERIE ET APPAREIL ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2022 Bulletin 2022/42**

(73) Proprietor: **Contemporary Amperex Technology
(Hong Kong) Limited
Central, Central And Western District (HK)**

(72) Inventors:
• **LIU, Xin
Ningde, Fujian 352100 (CN)**
• **HUANG, Qisen
Ningde, Fujian 352100 (CN)**
• **LI, Cheng
Ningde, Fujian 352100 (CN)**
• **GUAN, Yingjie
Ningde, Fujian 352100 (CN)**
• **WEN, Yan
Ningde, Fujian 352100 (CN)**
• **LIU, Xianghui
Ningde, Fujian 352100 (CN)**

(74) Representative: **von Tietzen und Hennig, Nikolaus
Lorenz Seidler Gossel
Rechtsanwälte Patentanwälte
Partnerschaft mbB
Widenmayerstraße 23
80538 München (DE)**

(56) References cited:
**CN-A- 107 112 521      CN-A- 107 112 522
CN-A- 110 010 863      CN-A- 111 180 693
CN-A- 111 453 713      CN-A- 111 710 845
US-A1- 2017 346 066**

**(Cont. next page)**

(52) Cooperative Patent Classification (CPC): (Cont.)
**H01M 10/0525;** C01P 2004/50; C01P 2004/61;
C01P 2004/64; C01P 2004/80; C01P 2006/11;
C01P 2006/12; C01P 2006/40; H01M 2004/021;
H01M 2004/027; Y02E 60/10

**Description**

**TECHNICAL FIELD**

This invention relates to the field of batteries, and in particular, to a silicon-based material, and a secondary battery, a battery module, a battery pack, and an apparatus associated therewith.

**BACKGROUND**

Secondary batteries have been widely used in the new energy industry by virtue of their advantages such as high energy density, long cycle life, zero pollution, and zero memory effect. For example, with the development of new energy vehicles, demands for secondary batteries are in explosive growth.

As people have increasing demands for energy density of secondary batteries, the development of materials with high specific capacity is becoming more urgent. Theoretical specific capacity of silicon-based materials is up to 3600mAh/g, much higher than specific capacity (360mAh/g) of graphite carbon materials which are commercially available at present. With the advantage of abundant resources, the silicon-based materials have become a research and development focus of the next generation materials.

However, silicon-based materials have poor cycling performance caused by large volume changes in lithium intercalation and deintercalation (up to 300% for pure silicon) and poor structural stability, greatly limiting their large-scale application.

Silicon-based materials of the generic kind are disclosed, for example, in CN 111 710 845 A and US 2017/346066 A1.

**SUMMARY**

To solve the above technical problem, the present invention provides a silicon-based material according to claim 1. The silicon-based material includes a core structure and a coating layer provided on at least partial surface of the core structure, where the core structure includes both a silicon phase and a lithium metasilicate phase, and a particle size P of the lithium metasilicate phase is $\geq$30nm.

The silicon-based material of this invention is a core-shell structure, where the core structure includes the silicon phase and the lithium metasilicate phase. The lithium metasilicate phase having the above particle size can effectively offset shrinkage and swelling of the silicon phase during intercalation and deintercalation of lithium ions, increasing structural stability of the silicon phase, which avoids degraded cycling performance of a secondary battery caused by pulverization and collapse of the silicon phase. In addition, the lithium metasilicate phase having the above particle size can also allow the silicon-based material to have notable chemical stability, reducing contact areas of the lithium metasilicate phase with water, air, electrolyte, and the like during preparation of the secondary battery, and lowering a possibility of side reaction, which avoids negative impact on cycling performance and first-cycle coulombic efficiency of the secondary battery due to lithium loss. Therefore, the silicon-based material of this invention can not only increase energy density of a secondary battery with the silicon phase, but also overcome instability of a silicon phase structure. With structural stability and chemical stability of the silicon-based material improved, the secondary battery can deliver satisfactory and balanced cycling performance and first-cycle coulombic efficiency in overall.

More specifically, according to the invention, 30nm$\leq$P$\leq$100nm. The lithium metasilicate phase with such particle size helps efficient conduction of lithium ions, thereby further improving cycling performance of the secondary battery.

Further, according to the invention, a particle size Q of the silicon phase is 50nm$\leq$Q$\leq$300nm. In this application, the particle size of the silicon phase is limited, which allows the secondary battery to have more prominent cycling performance.

Yet further, according to the invention, the silicon-based material satisfies 1$\leq$Q/P$\leq$4. In this application, a particle size ratio of the silicon phase to the lithium metasilicate phase in the silicon-based material is controlled so as to maximize a buffering effect of the lithium metasilicate phase on deformation of the silicon phase, further overcoming the poor structural stability of the silicon phase, which further improves cycling performance of the secondary battery.

Yet further, according to the invention, a molar ratio of element silicon to element lithium in the silicon-based material satisfies 1$\leq$m$\leq$5, optionally, 1$\leq$m$\leq$3. Such limitation on the molar ratio of element silicon to element lithium can ensure that the silicon phase efficiently increases energy density of the secondary battery, effectively reducing probability of electrode plate deformation due to swelling of the silicon phase and ensuring ionic conductivity of the electrode plate, which further improves cycling performance of the battery.

In any one of the embodiments of this invention, a median particle size by volume $D_v50$ of the silicon-based material is $\leq$10$\mu$m, optionally, 5$\mu$m$\leq$$D_v50\leq$7$\mu$m. Kinetic performance and cycling performance of the secondary battery can be further improved by controlling the median particle size by volume $D_v50$ of the silicon-based material.

In any one of the embodiments of this invention, a specific surface area of the silicon-based material is $0.5m^2/g$-$3m^2/g$, optionally, $0.5m^2/g$-$1.5m^2/g$. The silicon-based material with such specific surface area in this application has better structural stability and chemical stability and allows efficient conduction of lithium ions, such that the secondary battery has even better cycling performance and first-cycle coulombic efficiency.

In any one of the embodiments of this invention, a powder tap density of the silicon-based material is $0.6g/cm^3$-$1.2g/cm^3$, and a power press density of the silicon-based material is $1.0g/cm^3$-$1.5g/cm^3$. Such limitations on the power tap density and the powder press density can allow more silicon-based material to be contained in the electrode plate, thereby increasing energy density of the secondary battery.

According to the invention, the lithium metasilicate phase includes at least one of $Li_2Si_2O_5$, and $Li_2SiO_3$.

In any one of the embodiments of this invention, the coating layer is made of at least one of carbon-based material, organic polymer, metal, and metal oxide. The selection of coating material in this application can effectively prevent the electrolyte from entering the coating layer and contacting with the inner core, avoiding lithium loss caused by reaction of the electrolyte with the silicon phase and the lithium metasilicate phase.

In any one of the embodiments of this invention, a thickness of the coating layer is $\leq$30nm. Such thickness can not only effectively avoid contact between the electrolyte and the inner core, but also ensure that lithium ions quickly pass through the coating layer to be deintercalated from or intercalated to the silicon phase, which helps improve cycling performance of the secondary battery.

A preparation method of a silicon-based material may include the following steps:

(1) adding silicon monoxide, metallic lithium, and a complexing agent into an ether solvent and performing filtration, and performing heat treatment on a solid-phase system resulting from the filtration to obtain primary precursor particles;
(2) adding the primary precursor particles into a solvent mixture of ethanol and water and performing filtration to obtain secondary precursor particles; and
(3) performing coating treatment on the secondary precursor particles to obtain a silicon-based material;

where the silicon-based material includes a core structure and a coating layer provided on at least partial surface of the core structure, where the core structure includes both a silicon phase and a lithium metasilicate phase, and a particle size P of the lithium metasilicate phase is $\geq$30nm.

The preparation method is simple, easy to use, safe, and efficient, by which a silicon-based material having excellent structural stability and chemical stability and including a silicon phase and a lithium metasilicate phase can be obtained. Thus, the secondary battery has relatively balanced cycling performance and first-cycle coulombic efficiency with an increased energy density.

In any one of the embodiments of this application, in step (1), a mass ratio of the silicon monoxide to the metallic lithium is 1:(0.03-0.16), optionally, 1:(0.05-0.16). A ratio of the silicon phase to the lithium metasilicate phase in the inner core structure of the silicon-based material can be controlled by controlling the ratio of the silicon monoxide to the metallic lithium, so that the silicon-based material can effectively increase energy density of the secondary battery with notable structural stability.

In any one of the embodiments of this application, in step (1), a heat treatment temperature is $\geq$600°C, optionally, 700°C-900°C.

In any one of the embodiments of this application, in step (1), a heat treatment time is $\geq$0.5h, optionally, 1h-3h.

Further limitations on the heat treatment temperature and the heat treatment time can optimize particle sizes of the silicon phase and the lithium metasilicate phase in the silicon-based material, such that the particle sizes thereof are better matched, helping improve the cycling performance and first-cycle coulombic efficiency of the secondary battery.

In any one of the embodiments of this application, in step (2), the primary precursor particles are stirred for at least 12h in the solvent mixture followed by filtration to obtain the secondary precursor particles; and optionally, the primary precursor particles are stirred for 12h-24h in the solvent mixture. Such stirring time is conducive to transforming the silicon monoxide and the metallic lithium into the silicon phase and the lithium metasilicate phase, thereby ensuring efficient preparation of the silicon-based material.

In any one of the embodiments of this application, in step (3), a coating treatment temperature is $\leq$800°C, optionally, 600°C-800°C.

In any one of the embodiments of this application, in step (3), a heat treatment time is $\leq$6h, optionally, 0.5h-3h.

In addition to ensuring that the core structure is coated, the above coating temperature and coating time can avoid further increase of the particle sizes of the silicon phase and the lithium metasilicate phase in the inner core structure, helping further improve the cycling performance and first-cycle coulombic efficiency of the secondary battery.

In any one of the embodiments of this application, a mass ratio of the primary precursor particles to the ethanol/water solution is 0.01-0.1. Such mass ratio allows unreacted metallic lithium in the system to be further removed, avoiding impact on the energy density, cycling performance, and first-cycle coulombic efficiency of the secondary battery because of reaction of the silicon-based material with water, electrolyte, and the like during assembling of the secondary battery.

The invention further provides a secondary battery which includes the silicon-based material of the invention. The secondary battery has not only a high energy density but also delivers relatively balanced cycling performance and first-cycle coulombic efficiency.

Another aspect of this invention is a battery module which includes the secondary battery of the invention. Therefore, the battery module not only has a high energy density but also delivers relatively balanced cycling performance and first-cycle coulombic efficiency.

Another aspect of this invention is a battery pack which includes the battery module of the invention. Therefore, the battery pack not only has a high energy density but also delivers relatively balanced cycling performance and first-cycle coulombic efficiency.

Another aspect of this invention is an apparatus which includes at least one of the secondary battery, the battery module, or the battery pack of the invention. The apparatus is characterized by excellent endurance and long service life, and therefore has high user satisfaction.

## BRIEF DESCRIPTION OF DRAWINGS

To describe the technical solutions in the embodiments more clearly, the following briefly describes the accompanying drawings required for describing the embodiments of this application.

FIG. 1 is a schematic diagram of an embodiment of a secondary battery.
FIG. 2 is an exploded view of FIG. 1.
FIG. 3 is a schematic diagram of an embodiment of a battery module.
FIG. 4 is a schematic diagram of an embodiment of a battery pack.
FIG. 5 is an exploded view of FIG. 4.
FIG. 6 is a schematic diagram of an embodiment of an apparatus using a secondary battery as a power source.
FIG. 7 is an XRD pattern of a silicon-based material in Example 1.
FIG. 8 is an SEM graph of a silicon-based material in Example 1.

## DESCRIPTION OF EMBODIMENTS

To make the objectives, technical solutions, and advantages of this application clearer, the following clearly and completely describes the technical solutions in the examples of this application with reference to the accompanying drawings in the examples of this application.

Silicon-based material

Embodiments of a first aspect of this application provide a silicon-based material which includes a core structure and a coating layer provided on at least partial surface of the core structure, where the core structure includes both a silicon phase and a lithium metasilicate phase, and a particle size P of the lithium metasilicate phase is $\geq$30nm.

In the core structure of the silicon-based material of this application, the silicon phase is used for increasing energy density. To overcome poor structural stability of the silicon phase, a lithium metasilicate phase with a particle size $P\geq$30nm is distributed around the silicon phase. As a buffer, the lithium metasilicate phase with such particle size can effectively offset shrinkage and swelling of the silicon phase during intercalation and deintercalation of lithium ions, providing the silicon phase more mechanical support and reducing the collapse and pulverization of the silicon phase, so that the silicon-based material with high energy density still has satisfactory structural stability, helping guarantee cycling performance of a secondary battery.

The silicon-based material of this application can also improve first-cycle coulombic efficiency of the secondary battery. Based on analysis of this phenomenon, the inventors believe that during preparation of a secondary battery, some silicon-based materials inevitably come into contact with active components such as water and electrolyte. Compared with a lithium metasilicate phase with a smaller particle size, a lithium metasilicate phase with a particle size $\geq$30nm allows the material to have better chemical stability, which in turn improves the first-cycle coulombic efficiency of the secondary battery.

In addition to increasing structural stability and chemical stability of the silicon-based material, the lithium metasilicate phase can also be used as a conductor of lithium ions to implement deintercalation and intercalation of lithium ions from and to the silicon phase, thereby further improving the cycling performance of the secondary battery.

The silicon-based material of this application is a core-shell structure whose outer surface is at least partly covered by a coating layer. The coating layer can effectively isolate the electrolyte from the core structure and particularly avoid contact reaction of the electrolyte with the silicon phase. This can not only make the silicon phase retain more sites for intercalation of lithium ions but also avoid lithium consumption increased due to repeated formation of SEI films caused by possible pulverization of the silicon phase. In this application, the structure and composition of the silicon-based material are controlled, which allows the silicon-based material to increase energy density of the secondary battery and deliver balanced cycling performance and first-cycle coulombic efficiency of the secondary battery.

More specifically, according to the invention, the particle size of the lithium metasilicate phase satisfies $30nm \leq P \leq 100nm$, for example, $40nm \leq P \leq 100nm$, and $30nm \leq P \leq 90nm$. The lithium metasilicate phase whose particle size is within the above range can better cope with deformation of the silicon phase and further reduce probability of pulverization and collapse of the silicon phase, increasing the transmission speed of lithium ions in the lithium metasilicate phase, which further optimizes the cycling performance of the secondary battery. Optionally, the particle size of the lithium metasilicate phase is typically controlled to be $30nm \leq P \leq 100nm$, for example, $40nm \leq P \leq 70nm$.

The lithium metasilicate phase includes at least one of $Li_2Si_2O_5$, and $Li_2SiO_3$.

In addition to limiting the particle size of the lithium metasilicate phase, this application may also limit the particle size of the silicon phase to improve electrical performance of the secondary battery.

A particle size Q of the silicon phase is $50nm \leq Q \leq 300nm$. The silicon phase whose particle size is within the given range can further increase the structural stability of the material and the transmission speed of lithium ions, thereby further improving cycling performance of the battery.

In this application, particle sizes refer to particle sizes of the silicon phase and the lithium metasilicate phase, which are calculated by using a Scherrer formula after analyzing phase composition of the material with an X-ray diffractometer, and measuring diffraction angles and full widths at half maximum of the silicon phase and the lithium metasilicate phase at their strongest diffraction peaks.

$$\text{Scherrer formula: } D = K\gamma/B/\text{Cos } \theta.$$

In the formula, D represents particle size, K represents the Scherrer constant which is 0.89, $\gamma$ represents an X-ray diffraction wavelength which is 0.154056nm, B represents a full width at half maximum of a diffraction peak (which is converted into a radian, radian=angle/180° * 3.14), and $\theta$ represents a diffraction angle. Main diffraction peaks at diffraction angles of $28.5 \pm 0.5°$, $24.7 \pm 0.5°$, $26.9 \pm 0.5°$, and $22.2 \pm 0.5°$ are respectively selected for the silicon, $Li_2Si_2O_5$, $Li_2SiO_3$, and $Li_4SiO_4$ phases to calculate their particle sizes.

A particle size ratio Q/P of the silicon phase to the lithium metasilicate phase in the silicon-based material is $1 \leq Q/P \leq 4$. When Q/P is within the given range, swelling and shrinkage of the silicon phase can be alleviated to a great extent by the lithium silicate phase around it, which better copes with deformation of the silicon phase, significantly reduces probability of pulverization and collapse of the silicon phase, and further increases the structural stability of the material, allowing the secondary battery to have more satisfactory cycling performance.

A molar ratio m of element silicon to element lithium in the silicon-based material of this application satisfies $1 \leq m \leq 5$. Based on the foregoing, the silicon phase is mainly used to increase the energy density of the silicon-based material, while the lithium metasilicate phase is used to offset deformation of the silicon phase so as to reduce probability of pulverization and collapse of the silicon phase. Therefore, positive and negative effects of the silicon phase are balanced by controlling the ratio of the element silicon to the element lithium in the silicon-based material, ensuring that the silicon-based material has a high and satisfactory energy density, without affecting the cycling performance of the secondary battery due to deformation proneness of the silicon-based material with an excessive silicon phase. Optionally, $1 \leq m \leq 3$, in which case the silicon-based material has good structural stability.

In some embodiments, a median particle size by volume $D_v50$ of the silicon-based material is $\leq 10\mu m$. The median particle size by volume $D_v50$ of $\leq 10\mu m$ further guarantees the structural stability of the silicon-based material, without excessive consumption of electrolyte, thereby allowing the secondary battery to deliver more balanced cycling performance. In addition, the appropriate median particle size by volume facilitates a suitable diffusion path for lithium ions, thus further improving kinetic performance of the battery. Optionally, $5\mu m \leq D_v50 \leq 7\mu m$.

In some embodiments, a specific surface area of the silicon-based material in this application is $0.5m^2/g$-$3m^2/g$, optionally, $0.5m^2/g$-$1.5m^2/g$. The specific surface area being within the given range can further improve structural stability and lithium ion conduction efficiency of the silicon-based material, inhibiting excessive loss of lithium, which helps further improve cycling performance and first-cycle coulombic efficiency of the secondary battery.

In some embodiments, a powder tap density of the silicon-based material in this application is $0.6g/cm^3$-$1.2g/cm^3$.

In some embodiments, a powder press density of the silicon-based material in this application is $1.0g/cm^3$-$1.5g/cm^3$. The tap density and/or the press density being within the given ranges can ensure that more silicon-based material is attached to a current collector per unit area, thereby significantly increasing energy density of the secondary battery.

In the silicon-based material of this application, the coating layer that covers at least partial surface of the inner core structure is not limited to a specific material, provided that the material can block entry of electrolyte and implement conduction of lithium ions, and has a lower reduction potential than the silicon phase. For example, the material may be selected from at least one of carbon-based material, organic polymer, metal, and metal oxide. For example, the material may be alkane, olefin, alkyne, carbon nanotube, carbon fiber, graphene, polyacrylonitrile, resorcinol, silane, Cu, Ni, $TiO_2$, $Al_2O_3$, or the like.

In addition, the coating layer of the silicon-based material has a thickness $\leq$30nm. Such thickness can effectively isolate the electrolyte from the inner core structure and inhibit excessive loss of lithium by reducing contact areas of the silicon phase and lithium metasilicate phase with the electrolyte, allowing rapid passage of lithium ions to efficiently complete deintercalation and intercalation of lithium, which further increases the cycling performance and first-cycle coulombic efficiency of the secondary battery.

A preparation method of a silicon-based material of the invention may include the following steps:

(1) adding silicon monoxide, metallic lithium, and a complexing agent into an ether solvent and performing filtration, and performing heat treatment on a solid-phase system resulting from the filtration to obtain primary precursor particles;
(2) adding the primary precursor particles into a solvent mixture of ethanol and water and performing filtration to obtain secondary precursor particles; and
(3) performing coating treatment on the secondary precursor particles to obtain a silicon-based material;

where the silicon-based material includes a core structure and a coating layer provided on at least partial surface of the core structure, where the core structure includes both a silicon phase and a lithium metasilicate phase, and a particle size P of the lithium metasilicate phase is $\geq$30nm.

In step (1), by mixing and stirring the silicon monoxide, the metallic lithium, and the complexing agent in the ether solvent, the metallic lithium and the silicon monoxide are gradually bonded, where a longer stirring time leads to more metallic lithium bonded with silicon monoxide. Then, the solvent mixture is filtrated, and a solid-phase system resulting from the filtration is heat treated to obtain primary precursor particles. The above heat treatment step can not only make the solid-phase system transformed into the silicon phase and the lithium metasilicate phase, but also control the particle size P of the lithium metasilicate phase to be $\geq$30nm. The ether solvent used in this application is conducive to the solubility and dispersion of the raw materials.

In some embodiments, heat treatment may be performed in a tube furnace filled with argon.

It should be noted that in step (1), mixing of the silicon monoxide, the metallic lithium, and the complexing agent with the organic solvent should be performed in an inert gas protection atmosphere, for example, such mixing may be performed in an argon atmosphere with an oxygen concentration $\leq$100ppm.

In addition, the solid-phase system resulting from the filtration may further be washed 3-5 times with glycol dimethyl ether to remove the complexing agent therein, and heat treated after dried at 50°C-70°C.

Step (2) is performed for increasing conductivity of the silicon-based material. Specifically, the primary precursor particles in step (1) have some unreacted metallic lithium. In order to avoid possible production of lithium oxide from residual metallic lithium contacting water or being heated during preparation of the secondary battery, which affects conductivity of the silicon-based material, it is necessary to remove lithium from the primary precursor particles.

Specifically, the primary precursor particles are added into a solvent mixture of ethanol and water to dissolve the residual metallic lithium, and the secondary precursor particles are collected after filtration.

In some embodiments, after the primary precursor particles are added into the solvent mixture of ethanol and water, the residual metallic lithium is dissolved as completely as possible by controlling a stirring time to be not less than 12h, for example, 12h-24h.

Step (3) is performing coating treatment on the secondary precursor particles. A specific coating method may be determined according to coating treatment temperature and a selected coating agent (at least one of carbon-based material, organic polymer, metal, and metal oxide). For example, the coating method may be a gas phase chemical deposition method, a spray drying method, a liquid phase reduction method, a sol-gel method, and the like that are commonly used in the art.

Furthermore, the secondary precursor particles may be dried at 500°C-800°C before the coating treatment.

According to the preparation method, processes of prelithiation, heat treatment, residual lithium removal and coating treatment are performed in turn to produce a silicon-based material with a core-shell structure which allows the secondary battery to have balanced and satisfactory energy density, cycling performance, and first-cycle coulombic efficiency, where the inner core structure of the silicon-based material includes a silicon phase and a lithium metasilicate phase with a particle size $\geq$30nm. This method is simple, easy to use, safe, and efficient, and therefore is suitable for wide use and large-scale application.

In some embodiments, a heat treatment temperature in step (1) is not lower than 600°C, for example, being 600°C-1000°C, and optionally, heat treatment temperature is 700°C-900°C.

In some embodiments, a heat treatment time in step (1) is not less than 0.5h, for example, 0.5h-12h, and optionally, the heat treatment time is 1h-3h.

The temperature and time being regulated within the above ranges can further control the particle size P of the lithium metasilicate phase and the particle size Q of the silicon phase. During preparation, different masses of the silicon monoxide, the metallic lithium, and the complexing agent, different complexing agents and organic solvents, and even different stirring time before heat treatment all affect the particle sizes of the silicon phases and lithium metasilicate phases in the primary precursor particles. The temperature and time can substantially further improve the structural stability and chemical stability of the silicon-based material, making the secondary battery have better electrical performance. For example, in this embodiment, $30nm \leq P \leq 500nm$, $Q \geq 10nm$, and $0.5 \leq Q/P \leq 5$ can be satisfied. Based on the above limited temperature and time, the particle size of the lithium metasilicate phase increases with increasing of the heat treatment temperature and time.

In some embodiments, a mass ratio of the silicon monoxide to the metallic lithium in step (1) is 1:(0.03-0.16), optionally, 1:(0.05-0.16). Such mass ratio helps control a mass ratio of the silicon phase to the lithium metasilicate phase in the inner core structure of the silicon-based material, allowing the silicon-based material with a specific structural stability and chemical stability to have a high energy density, and increasing the electrical performance of the secondary battery, which overcomes defects caused by the silicon phase. For example, controlling the mass ratio of the silicon monoxide to the metallic lithium makes a molar ratio m of element silicon to element lithium be within 1-5.

In addition, the ether solvent in step (1) may be glycol dimethyl ether and/or ethylene glycol diethyl ether.

The complexing agent in step (1) may be an aromatic solvent, optionally, at least one of benzene, biphenyl, naphthalene, and anthracene. Furthermore, the complexing agent has a concentration of 0.01-0.5mol/L based on the organic solvent, meaning 0.01-0.5mol/L complexing agent may be added per 1L organic solvent.

When the ether solvent and/or complexing agent are multiple compounds, this application does not limit the ratio among these compounds.

In some embodiments, in step (3), the coating treatment temperature is ≤800°C, optionally, 600°C-800°C.

In some embodiments, the coating treatment time is ≤6h, optionally, 0.5h-3h.

The inventors have found that both the coating treatment temperature and the coating treatment time affect particle sizes of the silicon phase and the lithium metasilicate phase in the secondary precursor particles, and controlling the coating treatment temperature and the coating treatment time to be within the above ranges can help keep the particle sizes of the silicon phase and the lithium metasilicate phase in the material within the given ranges.

In some embodiments, a volume ratio of ethanol to water in the solvent mixture of ethanol and water in step (2) is (1-5): 1, which helps remove residual lithium more gently. Furthermore, when a mass ratio of the primary precursor particles to the solvent mixture of ethanol and water is (0.01-0.1):1, residual lithium in the primary precursor particles is removed more thoroughly.

<u>Secondary battery</u>

EA secondary battery of the invention includes the silicon-based material of the invention.

Made of the silicon-based material of the invention, the secondary battery of this application delivers balanced cycling performance and first-cycle coulombic efficiency with a high energy density.

Specifically, the silicon-based material of the invention is used as a negative-electrode active material applied to a negative-electrode plate of the secondary battery of the third aspect of this application. In addition, the secondary battery further includes a positive-electrode plate and an electrolyte. During charging/discharging of the battery, active ions are intercalated and deintercalated back and forth between the positive-electrode plate and the negative-electrode plate. The electrolyte conducts ions between the positive-electrode plate and the negative-electrode plate.

[Negative-electrode plate]

The negative-electrode plate includes a negative-electrode current collector and a negative-electrode film layer provided on at least one surface of the negative-electrode current collector, and the negative-electrode film layer includes the silicon-based material in the first aspect.

For example, the negative-electrode current collector includes two back-to-back surfaces in a thickness direction thereof, and the negative-electrode film layer is provided on either or both of the two back-to-back surfaces of the negative-electrode current collector.

In the secondary battery of this application, the negative-electrode current collector may use a metal foil or a composite current collector. For example, the negative-electrode current collector may use a copper foil. The composite current collector may include a polymer matrix and a metal layer formed on at least one surface of the polymer matrix. The composite current collector may be formed by forming a metal material (such as copper, copper alloy, nickel, nickel alloy, titanium, titanium alloy, silver, and silver alloy) on the polymer matrix (for example, a matrix of polypropylene (PP), polyethylene terephthalate (PET), polybutylene terephthalate (PBT), polystyrene (PS), polyethylene (PE), or copolymers thereof).

In the secondary battery of this application, the negative-electrode film layer typically includes the negative-electrode active material, an optional binder, an optional conductive agent, and other optional additives, and is usually formed by being coated with a negative-electrode slurry which is dried. The negative electrode slurry is usually formed by dispersing the negative electrode active material and the optional conductive agent and binder, and the like in a solvent and stirring them uniformly. The solvent may be N-methylpyrrolidone (NMP) or deionized water.

For example, the conductive agent may include one or more of superconducting carbon, acetylene black, carbon black, Ketjen black, carbon dots, carbon nanotubes, graphene, and carbon nanofiber.

For example, the binder may be selected from one or more of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

For example, the other optional additives may be a thickener (for example, sodium carboxymethyl cellulose (CMC-Na)).

In addition to the silicon-based material in the first aspect of this application or the silicon-based material obtained by the preparation method in the second aspect of this application, the negative-electrode film layer in the secondary battery of this application optionally includes a specific amount of other common negative-electrode active materials, for example, one or more of other artificial graphite, natural graphite, soft carbon, hard carbon, silicon-based material, tin-based material, and lithium titanate, where the other silicon-based materials may be selected from one or more of elemental silicon, silicon-oxygen compounds, silicon-carbon composites, silicon-nitrogen composites, and silicon alloys. The tin-based material may be selected from one or more of elemental tin, tin-oxygen compounds, and tin alloys.

[Positive-electrode plate]

The positive-electrode plate includes a positive-electrode current collector and a positive-electrode film layer provided on at least one surface of the positive-electrode current collector, and the positive-electrode film layer includes a positive-electrode active material.

For example, the positive-electrode current collector includes two back-to-back surfaces in a thickness direction thereof, and the positive-electrode film layer is provided on either or both of the two back-to-back surfaces of the positive-electrode current collector.

The positive-electrode current collector in the secondary battery of this application may use a metal foil or a composite current collector. For example, the positive-electrode current collector may use an aluminum foil. The composite current collector may include a polymer matrix and a metal layer formed on at least one surface of the polymer matrix. The composite current collector may be formed by forming a metal material (such as aluminum, aluminum alloy, nickel, nickel alloy, titanium, titanium alloy, silver, and silver alloy) on the polymer matrix (for example, a matrix of polypropylene (PP), polyethylene terephthalate (PET), polybutylene terephthalate (PBT), polystyrene (PS), polyethylene (PE), or copolymers thereof).

In the secondary battery of this application, the positive-electrode active material may be a well-known positive-electrode active material for secondary batteries in the art. For example, the positive-electrode active material may include one or more of olivine-type lithium-containing phosphate, lithium transition metal oxide, and respective modified compounds thereof. However, this application is not limited to such materials, but may alternatively use other conventional well-known materials that can be used as a positive-electrode active material for secondary batteries. One type of these positive-electrode active materials may be used alone, or two or more types may be used in combination. For example, the lithium transition metal oxide may include but is not limited to one or more of lithium cobalt oxide ($LiCoO_2$), lithium nickel oxide ($LiNiO_2$), lithium manganese oxide ($LiMnO_2$ and $LiMn_2O_4$), lithium nickel cobalt oxide, lithium manganese cobalt oxide, lithium nickel manganese oxide, lithium manganese cobalt oxide ($LiNi_{1/3}Co_{1/3}Mn_{1/3}O_2$ (NCM333), $LiNi_{0.5}Co_{0.2}Mn_{0.3}O_2$ (NCM523), $LiNi_{0.5}CO_{0.25}Mn_{0.25}O_2$ (NCM211), $LiNi_{0.6}Co_{0.2}Mn_{0.2}O_2$ (NCM622), and $LiNi_{0.8}Co_{0.1}Mn_{0.1}O_2$ (NCM811)), lithium nickel aluminum cobalt oxide ($LiNi_{0.85}Co_{0.15}Al_{0.05}O_2$), and modified compounds thereof. For example, the olivine-type lithium-containing phosphate may include but is not limited to one or more of lithium iron phosphate ($LiFePO_4$ (LFP)), composite material of lithium iron phosphate and carbon, lithium manganese phosphate ($LiMnPO_4$), composite material of lithium manganese phosphate and carbon, lithium manganese iron phosphate, and composite material of lithium manganese iron phosphate and carbon.

In some preferred embodiments, to further improve the energy density of the battery, the positive active material may include one or more of lithium transition metal oxides expressed in formula 1 and modified compounds thereof:

$$Li_aNi_bCo_cM_dO_eA_f \qquad \text{formula 1.}$$

In formula 1, $0.8 \leq a \leq 1.2$, $0.5 \leq b < 1$, $0 < c < 1$, $0 < d < 1$, $1 \leq e \leq 2$, $0 \leq f \leq 1$; M is selected from one or more of Mn, Al, Zr, Zn, Cu, Cr, Mg, Fe, V, Ti, and B, preferably, one or more of Mn and Al; and A is selected from one or more of N, F, S, and Cl, preferably, F.

The foregoing modified compounds may be obtained through doping modification and/or surface coating modification on the positive-electrode active material.

In some embodiments, the positive-electrode film layer further optionally includes a binder. The binder is not limited to any specific type, and may be selected by persons skilled in the art as required. For example, the binder for the positive-electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive-electrode film layer further optionally includes a conductive agent. The conductive agent is not limited to any specific type, and may be selected by persons skilled in the art as required. For example, the conductive agent for the positive-electrode film layer may include one or more of superconducting carbon, acetylene black, carbon black, Ketjen black, carbon dots, carbon nanotubes, graphene, and carbon nanofiber.

The positive-electrode plate may be prepared by using a method known in the art. For example, the positive-electrode active material, the conductive agent, and the binder may be dispersed in a solvent (for example, N-methylpyrrolidone, NMP for short) to form a uniform positive-electrode slurry; and the positive-electrode slurry is applied onto the positive-electrode current collector, followed by drying, cold pressing, and other processes, to obtain a positive-electrode plate.

[Electrolyte]

The electrolyte conducts ions between the positive-electrode plate and the negative-electrode plate. The electrolyte is not limited to any specific type in this application, and may be selected as required. For example, the electrolyte may be selected from at least one of a solid-state electrolyte and a liquid-state electrolyte (or electrolyte solution).

In some embodiments, an electrolyte solution is used as the electrolyte. The electrolyte solution includes an electrolytic salt and a solvent.

In some embodiments, the electrolytic salt may be selected from one or more of $LiPF_6$ (lithium hexafluorophosphate), $LiBF_4$ (lithium tetrafluoroborate), $LiClO_4$ (lithium perchlorate), $LiAsF_6$ (lithium hexafluoroborate), LiFSI (lithium bis(fluorosulfonyl)imide), LiTFSI (lithium bis-trifluoromethanesulfonimide), LiTFS (lithium trifluoromethanesulfonat), LiDFOB (lithium difluorooxalatoborate), LiBOB (lithium bisoxalatoborate), $LiPO_2F_2$ (lithium difluorophosphate), LiDFOP (lithium difluorophosphate), and LiTFOP (lithium tetrafluoro oxalate phosphate).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

In some embodiments, the electrolyte solution further optionally includes an additive. For example, the additive may include a negative-electrode film forming additive, or may include a positive-electrode film forming additive, or may include an additive capable of improving some performance of batteries, for example, an additive for improving overcharge performance of batteries, an additive for improving high-temperature performance of batteries, or an additive for improving low-temperature performance of batteries.

[Separator]

Secondary batteries using an electrolyte solution and some secondary batteries using a solid-state electrolyte further include a separator. The separator is provided between the positive-electrode plate and the negative-electrode plate to provide separation. The separator is not limited to any specific type in this application, and may be any commonly known porous separator with good chemical stability and mechanical stability. In some embodiments, a material of the separator may be selected from one or more of glass fiber, non-woven fabric, polyethylene, polypropylene, and polyvinylidene fluoride. The separator may be a single-layer film or a multi-layer composite film. When the separator is a multi-layer composite film, the multiple layers may be made of the same or different materials.

In some embodiments, the positive-electrode plate, the negative-electrode plate, and the separator may be made into an electrode assembly through winding or lamination.

In some embodiments, the secondary battery may include an outer package. The outer package may be used to package the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, one or more of polypropylene (PP), polybutylene terephthalate (PBT), and polybutylene succinate (PBS).

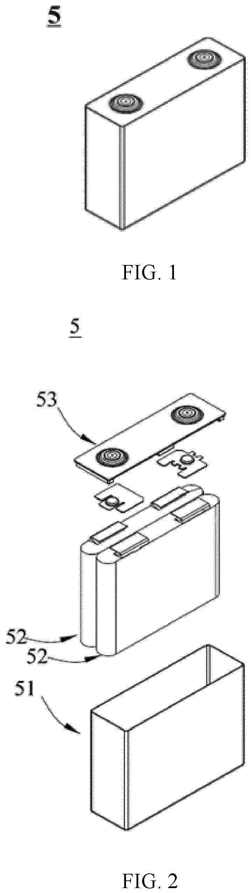

This application has no specific limitation on the secondary battery in terms of shape, and the secondary battery may be cylindrical, rectangular, or of any other shapes. FIG. 1 shows a secondary battery 5 with a rectangular structure as an example.

In some embodiments, referring to FIG. 2, the outer package may include a housing 51 and a cover plate 53. The housing 51 may include a base plate and a side plate connected onto the base plate, and the base plate and the side plates enclose an accommodating cavity. The housing 51 has an opening communicating with the accommodating cavity, and the cover plate 53 can cover the opening to close the accommodating cavity. A positive-electrode plate, a negative-electrode plate, and a separator form an electrode assembly 52 through winding or lamination. The electrode assembly 52 is packaged in the accommodating cavity. The electrolyte infiltrates into the electrode assembly 52. There may be one or more electrode assemblies 52 in the secondary battery 5, and the quantity may be adjusted as required.

Battery module

A battery module of the invention includes the foregoing battery.

The battery module of this application employs the secondary battery in the third aspect of this application, and therefore delivers balanced cycling performance and first-cycle coulombic efficiency with a high energy density.

In some embodiments, the battery module may be assembled using secondary batteries, and the battery module may include a plurality of secondary batteries, whose specific quantity may be adjusted based on use and capacity of the battery module.

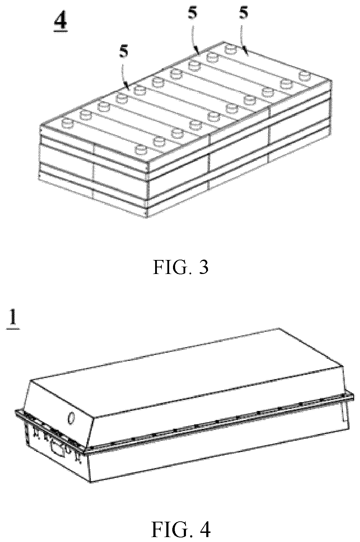

FIG. 3 shows a battery module 4 as an example. Referring to FIG. 3, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened by fasteners.

Optionally, the battery module 4 may further include a housing with an accommodating space, and the plurality of secondary batteries 5 are accommodated in the accommodating space.

Battery pack

The battery pack of the invention includes the foregoing battery module.

The battery pack of this application employs the battery module in the fourth aspect of this application, and therefore delivers balanced cycling performance and first-cycle coulombic efficiency with a high energy density.

In some embodiments, the battery pack is assembled using battery modules, and a quantity of battery modules included in the battery pack may be adjusted based on use and capacity of the battery pack.

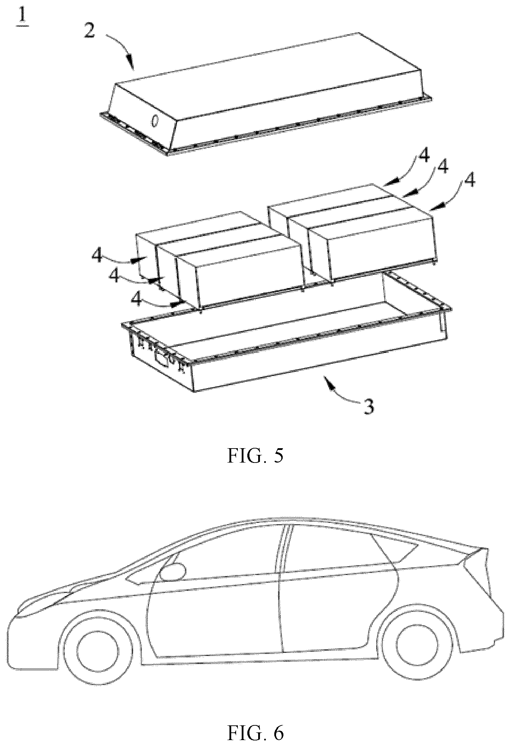

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

Apparatus

The apparatus of the invention includes at least one of the secondary battery, the battery module, or the battery pack provided in this application. The secondary battery, the battery module, or the battery pack may be used as a power source of the apparatus or as an energy storage unit of the apparatus. The apparatus may be, but is not limited to, a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the apparatus based on requirements for using the apparatus.

FIG. 6 shows an apparatus as an example. The apparatus is a battery electric vehicle, a hybrid electric vehicle, a plug-in hybrid electric vehicle, or the like. To meet requirements of the apparatus for high power and high energy density of the secondary battery, a battery pack or a battery module may be used.

In another example, the apparatus may be a mobile phone, a tablet computer, a laptop computer, or the like. Such apparatus is usually required to be light and thin and may a secondary battery as its power source.

Examples

Example 1

Preparation of silicon-based material

(1) Under protection of argon (oxygen content≤100ppm), specific amounts of silicon monoxide and metallic lithium (as shown in Table 1), and 15g biphenyl were added into 1L glycol dimethyl ether, followed by stirring for 12h and filtration, and a solid-phase system resulting from the filtration was heat treated in a tube furnace filled with argon to obtain primary precursor particles.
A heat treatment temperature was 600°C and a heat treatment time was 12h.
(2) The primary precursor particles were added into a solvent mixture of ethanol and water (with a volume ratio of 3:1), followed by stirring for 24h and filtration to obtain secondary precursor particles. Then, the secondary precursor particles were dried at 70°C.
(3) Coating treatment was performed on the secondary precursor particles with a carbon-based material to obtain a silicon-based material, where a coating treatment temperature was 700°C and a coating treatment time was 2h.

Preparation of positive-electrode plate

The silicon-based material, graphite, carboxymethylcellulose sodium (CMC, adhesive force), and a conductive agent Super-P were added into deionized water in a mass ratio of 2:6:1:1, followed by continuous stirring to obtain a uniform negative-electrode slurry. The negative-electrode slurry was applied to a surface of a copper foil with a scraper, and then was dried in a 80°C blast oven. The electrode sheet was punched into wafers having a diameter of 14mm by a hole puncher to obtain a final circular electrode plate. The electrode plate had a press density of $1.6g/cm^3$ and an areal density of $8mg/m^2$.

Preparation of button cell

The foregoing circular electrode plate (positive-electrode plate) prepared from a silicon-based material and a circular lithium negative-electrode plate were assembled into a button cell to characterize electrochemical performance thereof.
In a glove box filled with argon, the circular electrode plate prepared from the silicon-based material, the circular lithium negative-electrode plate, a separator, an electrolyte, and a button cell housing were assembled into a final button half battery. Celgard 2200 was selected as the separator, and 1M $LiPF_6$ dissolved into a solution mixture of EC:DMC:EM:FEC (with a volume ratio of 30:30:30:10) was selected as the electrolyte.
Examples 2-17 were similar to Example 1 in terms of preparation steps, except that parameters of the silicon-based material were adjusted.
Examples 1-3 and 7-13 are Inventive Examples.
Examples 4-6 and 14-17 are Comparative Examples outside the scope of the invention.
Product parameters of all examples and comparative examples were given in Table 1.

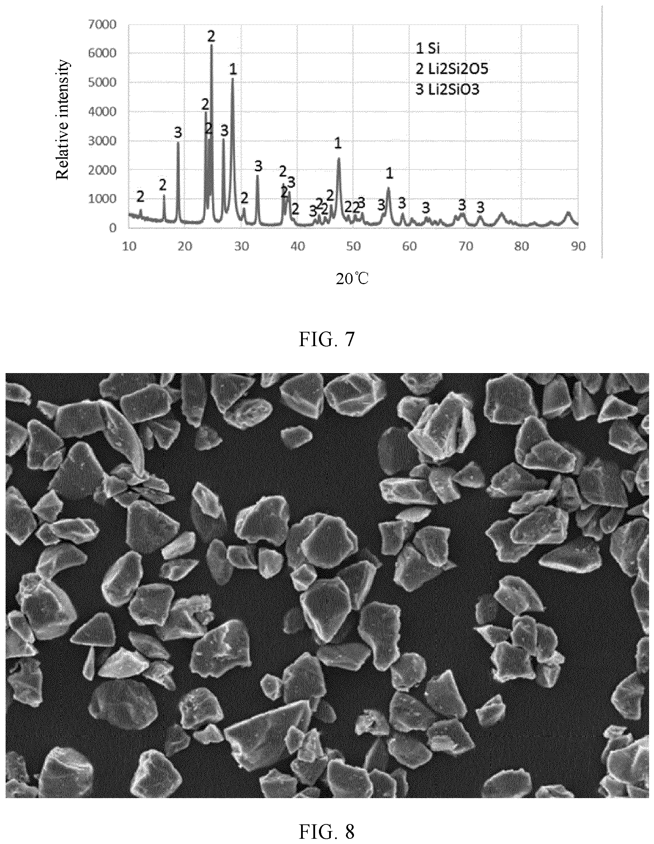

FIG. 7 is an XRD pattern of the silicon-based material in Example 1. In comparison with standard patterns of lithium metasilicate and silicon, the XRD pattern indicates that the silicon-based material of this example contains Si, $Li_2Si_2O_5$ and $Li_2SiO_3$ phases.
FIG. 8 is an SEM graph of the silicon-based material in Example 1. From the SEM graph, it can be seen that the silicon-based material in Example 1 has a median particle size of less than 10$\mu$m.

**Table 1**

| | Composition of inner core | Particle size (nm) | Q/P | m | Coating agent | $D_v50$ of silicon-based material ($\mu$m) | BET ($m^2$/g) | Ratio of SiO to Li | Heat treatment parameters | Coating treatment parameters |
|---|---|---|---|---|---|---|---|---|---|---|
| Example 1 | $Li_2Si_2O_5/Li_2SiO_3$ | P=32.3 | 3.2 | 2.6 | C | 6.3 | 1.01 | SiO 88g | 600°C 12h | 700°C 2h |
| | Si | Q=103.2 | | | | | | Li 5.6g | | |
| Example 2 | $Li_2Si_2O_5/Li_2SiO_3$ | P=51.4 | 2.5 | 2.6 | C | 6.3 | 0.97 | SiO 88g | 700°C 3h | 700°C 2h |
| | Si | Q=128.3 | | | | | | Li 5.6g | | |
| Example 3 | $Li_2Si_2O_5/Li_2SiO_3$ | P=88.2 | 1.7 | 2.6 | C | 6.9 | 1.02 | SiO 88g | 800°C 6h | 700°C 2h |
| | Si | Q=146.5 | | | | | | Li 5.6g | | |
| Example 4 | $Li_2Si_2O_5/Li_2SiO_3$ | P=137.9 | 1.6 | 2.6 | C | 6.6 | 1.05 | SiO 88g | 900°C 6h | 700°C 2h |
| | Si | Q=225.9 | | | | | | Li 5.6g | | |
| Example 5 | $Li_2Si_2O_5/Li_2SiO_3$ | P=189.6 | 1.5 | 2.6 | C | 6.6 | 0.98 | SiO 88g | 1000°C 2h | 700°C 2h |
| | Si | Q=287.6 | | | | | | Li 5.6g | | |
| Example 6 | $Li_2Si_2O_5/Li_2SiO_3$ | P=274.6 | 1.2 | 2.6 | C | 6.1 | 1.01 | SiO 88g | 1100°C 2h | 700°C 2h |
| | Si | Q=342 | | | | | | Li 5.6g | | |
| Example 7 | $Li_2Si_2O_5/Li_2SiO_3$ | P=34.9 | 3.0 | 4.9 | C | 6.7 | 0.95 | SiO 88g | 600°C 12h | 700°C 2h |
| | Si | Q=105.6 | | | | | | Li 2.8g | | |
| Example 8 | $Li_2Si_2O_5/Li_2SiO_3$ | P=37.4 | 2.9 | 1.6 | C | 6.6 | 1.03 | SiO 88g | 600°C 12h | 700°C 2h |
| | Si | Q=109.7 | | | | | | Li 9.24g | | |
| Example 9 | $Li_2SiO_3/Li_4SiO_4$ | P=36.0 | 3.0 | 1.1 | C | 6.3 | 0.96 | SiO 88g | 600°C 12h | 700°C 2h |
| | Si | Q=108.3 | | | | | | Li 14g | | |
| Example 10 | $Li_2Si_2O_5/Li_2SiO_3$ | P=32.5 | 3.2 | 2.6 | C | 12.4 | 0.45 | SiO 88g | 600°C 12h | 700°C 2h |
| | Si | Q=104.2 | | | | | | Li 5.6g | | |
| Example 11 | $Li_2Si_2O_5/Li_2SiO_3$ | P=33.7 | 3.1 | 2.6 | C | 8.7 | 0.67 | SiO 88g | 600°C 12h | 700°C 2h |
| | Si | Q=105.5 | | | | | | Li 5.6g | | |
| Example 12 | $Li_2Si_2O_5/Li_2SiO_3$ | P=32.9 | 3.3 | 2.6 | C | 4.8 | 1.25 | SiO 88g | 600°C 12h | 700°C 2h |
| | Si | Q=108.6 | | | | | | Li 5.6g | | |
| Example 13 | $Li_2Si_2O_5/Li_2SiO_3$ | P=33.2 | 3.2 | 2.6 | C | 3.3 | 1.78 | SiO 88g | 600°C 12h | 700°C 2h |
| | Si | Q=106.4 | | | | | | Li 5.6g | | |

(continued)

| | Composition of inner core | Particle size (nm) | Q/P | m | Coating agent | $D_v50$ of silicon-based material ($\mu$m) | BET (m²/g) | Ratio of SiO to Li | Heat treatment parameters | Coating treatment parameters |
|---|---|---|---|---|---|---|---|---|---|---|
| Example 14 | $Li_2Si_2O_5$ | P=3 5.4 | 3.0 | 10.1 | C | 6.1 | 0.99 | SiO 88g | 600°C 12h | 700°C 2h |
| | Si | Q=107.2 | | | | | | Li 1.4g | | |
| Example 15 | $Li_4SiO_4$ | P=38.4 | 2.8 | 0.8 | C | 6.1 | 0.97 | SiO 88g | 600°C 12h | 700°C 2h |
| | Si | Q=106.3 | | | | | | Li 16.8g | | |
| Example 16 | $Li_2Si_2O_5/Li_2SiO_3$ | P=24.5 | 3.6 | 2.6 | C | 6.1 | 0.99 | SiO 88g | 500°C 1h | 700°C 2h |
| | Si | Q=88.4 | | | | | | Li 5.6g | | |
| Example 17 | SiO | / | | | C | 6.1 | 0.99 | / | / | 700°C 2h |

Parameters in Table 1 were tested in the following methods.

1. Particle size

Phase composition of the material was analyzed with an X-ray diffractometer. Diffraction angles and full widths at half maximum of the silicon phase and the lithium metasilicate phase at their strongest diffraction peaks were measured. Then particle sizes of the silicon phase and the lithium metasilicate phase were calculated by using a Scherrer formula.

$$\text{Scherrer formula: } D=K\gamma/B/\cos\theta.$$

In the formula, D represents particle size, K represents the Scherrer constant which is 0.89, $\gamma$ represents an X-ray diffraction wavelength which is 0.154056nm, B represents a full width at half maximum of a diffraction peak (which is converted into a radian), and $\theta$ represents a diffraction angle.

2. Molar ratio m of silicon to lithium

Silicon and lithium concentrations in the material were measured by an inductively coupled plasma emission spectrometer (ICP). The measured molar concentration of silicon was divided by the molar concentration of the element lithium to obtain the molar ratio m of the elements.

3. Median particle size by volume $D_v50$

A median particle size by volume of the material was measured by a laser particle size analyzer (Mastersizer 2000) in accordance with the GB/T19077-2016standard.

4. Specific surface area BET

The specific surface area BET of the material was measured by a specific surface area analyzer (Tri star II) in accordance with the GB/T 19587-2004 standard.

Test cases

The following parameters were tested for negative-electrode plates and button cells in Examples 1-17, with results shown in Table 2.

1. Gram capacity and first-cycle coulombic efficiency

Charging/discharging test was performed on the button cells by a LAND battery tester at 25°C and normal pressure. A charging/discharging cut-off voltage was set to 0.01V-1.5V, and a current density was 100mA/g. Gram capacity of the material was a gram capacity of the battery at its first charge to 1.5V, and first-cycle coulombic efficiency of the material was a ratio of specific capacity of the battery at its first charge to 1.5V to that of the battery at its first discharge to 0.01V

2. Swelling rate of electrode plate fully charged

Initial thicknesses of the electrode plate and thickness of electrode plate fully charged were measured by a micrometer. The electrode plate fully charged was an electrode plate disassembled from the button cell discharged to 0.01V The swelling rate of the electrode plate fully charged was a ratio of a difference between the thickness of the electrode plate fully charged and the initial thickness of the electrode plate to the initial thickness of the electrode plate.

3. Capacity retention rate

This was the ratio of specific capacity of the button cell at the 100th charge to specific capacity of the button cell at the first charge, which characterizes cycling performance.

**Table 2**

|  | Gram capacity (mAh/g) | First-cycle coulombic efficiency (%) | Swelling rate of electrode plate fully charged | Capacity retention rate (%) |
|---|---|---|---|---|
| Example 1 | 570.2 | 88.3% | 25.0% | 87.2% |
| Example 2 | 568.8 | 86.5% | 27.2% | 84.4% |
| Example 3 | 565.7 | 85.4% | 30.6% | 81.5% |
| Example 4 | 559.5 | 83.9% | 33.4% | 78.9% |
| Example 5 | 553.5 | 82.6% | 35.3% | 76.7% |
| Example 6 | 531.9 | 80.2% | 37.6% | 75.4% |
| Example 7 | 575.8 | 84.1% | 27.5% | 83.3% |
| Example 8 | 557.3 | 92.5% | 23.6% | 89.5% |
| Example 9 | 520.3 | 95.8% | 18.3% | 94.4% |
| Example 10 | 543.5 | 87.6% | 28.1% | 84.5% |
| Example 11 | 560.3 | 87.8% | 26.7% | 85.5% |
| Example 12 | 572.6 | 86.4% | 26.4% | 86.5% |
| Example 13 | 563.4 | 85.3% | 27.3% | 86.1% |
| Example 14 | 584.6 | 82.3% | 29.4% | 80.1% |
| Example 15 | 490.7 | 87.6% | 24.1% | 86.9% |
| Example 16 | 430.4 | 67.4% | 28.2% | 57.6% |
| Example 17 | 640.8 | 74.4% | 44.5% | 67.8% |

According to Table 2:

Lithium metasilicate phases in silicon-based materials of Examples 1-15 all have a particle size greater than 30nm, which can well offset stress generated by the silicon phase and reduce probability of pulverization and collapse of the silicon phase with increased structural stability of the silicon-based material. Therefore, compared with Examples 16-17, batteries using the silicon-based materials of Examples 1-13 can deliver both higher gram capacity and higher first-cycle coulombic efficiency with good cycling performance and low swelling rate of the electrode plate.

## Claims

1. A silicon-based material, comprising a core structure and a coating layer provided on at least partial surface of the core structure, wherein the core structure comprises both a silicon phase and a lithium metasilicate phase, in the silicon-based material, a molar ratio m of element silicon to element lithium satisfies $1 \leq m \leq 5$, when measured as specified in the description, wherein the lithium metasilicate phase comprises at least one of $Li_2Si_2O_5$ and $Li_2SiO_3$, wherein a particle size P of the lithium metasilicate phase is $30 \leq P \leq 100nm$, when measured as specified in the description, and a particle size Q of the silicon phase is $50nm \leq Q \leq 300nm$, when measured as specified in the description, and the silicon-based material satisfies $1 \leq Q/P \leq 4$.

2. The silicon-based material according to claim 1, wherein, in the silicon-based material, a molar ratio m of element silicon to element lithium satisfies $1 \leq m \leq 3$;

3. The silicon-based material according to any one of claims 1 to 2, wherein a median particle size by volume $D_v50$ of the silicon-based material is $\leq 10\mu m$, optionally, $5\mu m \leq D_v50 \leq 7\mu m$, when measured as specified in the description;

4. The silicon-based material according to any one of claims 1 to 3, wherein a specific surface area of the silicon-based material is $0.5m^2/g$-$3m^2/g$, optionally, $0.5m^2/g$-$1.5m^2/g$, when measured as specified in the description.

5. The silicon-based material according to any one of claims 1 to 4, wherein a powder tap density of the silicon-based material is 0.6g/cm$^3$-1.2g/cm$^3$.

6.  The silicon-based material according to any one of claims 1 to 5, wherein a powder press density of the silicon-based material is 1.0g/cm$^3$-1.5g/cm$^3$.

7.  The silicon-based material according to any one of claims 1 to 6, wherein the coating layer is made of at least one of carbon-based material, organic polymer, metal, and metal oxide.

8.  The silicon-based material according to any one of claims 1 to 7, wherein a thickness of the coating layer is ≤30nm.

9.  A secondary battery (5), comprising the silicon-based material according to any one of claims 1 to 8.

10.  A battery module (4), comprising the secondary battery according to claim 9.

11.  A battery pack (1), comprising the battery module (4) according to claim 10.

12.  An apparatus, comprising at least one of the secondary battery (5) according to claim 9, the battery module (4) according to claim 10, and the battery pack (1) according to claim 11.

**Patentansprüche**

1.  Material auf Siliziumbasis, umfassend eine Kernstruktur und eine Überzugsschicht, die auf mindestens einer Teiloberfläche der Kernstruktur bereitgestellt ist, wobei die Kernstruktur sowohl eine Siliziumphase als auch eine Lithiummetasilikatphase in dem Material auf Siliziumbasis umfasst, ein Molverhältnis m des Elements Silizium zum Element Lithium 1≤m≤5 erfüllt, wenn es wie in der Beschreibung angegeben gemessen wird, wobei die Lithiummetasilikatphase mindestens eines von $Li_2Si_2O_5$ und $Li_2SiO_3$ umfasst, wobei eine Teilchengröße P der Lithiummetasilikatphase 30 ≤P≤100 nm beträgt, beträgt, wenn sie wie in der Beschreibung angegeben gemessen wird, und eine Teilchengröße Q der Siliziumphase 50 nm≤Q≤300 nm beträgt, wenn sie wie in der Beschreibung angegeben gemessen wird, und das Material auf Siliziumbasis 1≤Q/P≤4 erfüllt.

2.  Material auf Siliziumbasis nach Anspruch 1, wobei in dem Material auf Siliziumbasis ein Molverhältnis m des Elements Silizium zum Element Lithium 1≤m≤3 erfüllt;

3.  Material auf Siliziumbasis nach einem der Ansprüche 1 bis 2, wobei die mittlere Teilchengröße, bezogen auf das Volumen, $D_v50$ des Materials auf Siliziumbasis ≤10 μm, optional 5 μm≤$D_v$50≤7 μm beträgt, wenn sie wie in der Beschreibung angegeben gemessen wird;

4.  Material auf Siliziumbasis nach einem der Ansprüche 1 bis 3, wobei ein spezifischer Oberflächenbereich des Materials auf Siliziumbasis 0,5 m$^2$/g-3 m$^2$/g, optional 0,5 m$^2$/g-1,5 m$^2$/g beträgt, wenn er wie in der Beschreibung angegeben gemessen wird.

5.  Material auf Siliziumbasis nach einem der Ansprüche 1 bis 4, wobei die Pulverklopfdichte des Materials auf Siliziumbasis 0,6 g/cm$^3$-1,2 g/cm$^3$ beträgt.

6.  Material auf Siliziumbasis nach einem der Ansprüche 1 bis 5, wobei die Pulverpressdichte des Materials auf Siliziumbasis 1,0 g/cm$^3$-1,5 g/cm$^3$ beträgt.

7.  Material auf Siliziumbasis nach einem der Ansprüche 1 bis 6, wobei die Überzugsschicht aus mindestens einem Material auf Kohlenstoffbasis, einem organischen Polymer, einem Metall oder einem Metalloxid gebildet ist.

8.  Material auf Siliziumbasis nach einem der Ansprüche 1 bis 7, wobei die Dicke der Überzugsschicht ≤30 nm beträgt.

9.  Sekundärbatterie (5), umfassend das Material auf Siliziumbasis nach einem der Ansprüche 1 bis 8.

10.  Batteriemodul (4), umfassend die Sekundärbatterie nach Anspruch 9.

11.  Batterieakku (1), umfassend das Batteriemodul (4) nach Anspruch 10.

**12.** Vorrichtung, umfassend mindestens eine der folgenden Komponenten: die Sekundärbatterie (5) nach Anspruch 9, das Batteriemodul (4) nach Anspruch 10 und das Batterieakku (1) nach Anspruch 11.

**Revendications**

**1.** Matériau à base de silicium, le matériau comprenant une structure de noyau et une couche de revêtement disposée sur au moins une surface partielle de la structure de noyau, la structure de noyau comprenant à la fois une phase de silicium et une phase de métasilicate de lithium et, dans le matériau à base de silicium, un rapport molaire m de l'élément silicium à l'élément lithium satisfait à l'inégalité $1 \leq m \leq 5$, lors de sa mesure tel que spécifié dans la description ; dans lequel la phase de métasilicate de lithium comprend au moins un parmi $Li_2Si_2O_5$ et $Li_2SiO_3$ ; dans lequel une dimension P des particules de la phase de métasilicate de lithium est égale à $30 \leq P \leq 100$ nm, lors de sa mesure tel que spécifié dans la description, et une dimension Q des particules de la phase de silicium est égale à $50$ nm $\leq Q \leq 300$ nm, lors de sa mesure tel que spécifié dans la description, et le matériau à base de silicium satisfait à l'inégalité $1 \leq Q/P \leq 4$.

**2.** Le matériau à base de silicium selon la revendication 1, dans lequel, dans le matériau à base de silicium, un rapport molaire m de l'élément silicium à l'élément lithium satisfait à l'inégalité $1 \leq m \leq 3$.

**3.** Le matériau à base de silicium selon l'une quelconque des revendications 1 à 2, dans lequel une dimension médiane des particules par volume, $D_v50$, du matériau à base de silicium est $\leq 10$ μm, et éventuellement égale à $5$ μm $\leq D_v50 \leq 7$ μm, lors de sa mesure tel que spécifié dans la description.

**4.** Le matériau à base de silicium selon l'une quelconque des revendications 1 à 3, dans lequel une surface spécifique du matériau à base de silicium est comprise entre $0,5$ m$^2$/g et $3$ m$^2$/g, et éventuellement entre $0,5$ m$^2$/g et $1,5$ m$^2$/g, lors de sa mesure tel que spécifié dans la description.

**5.** Le matériau à base de silicium selon l'une quelconque des revendications 1 à 4, dans lequel une masse volumique tassée de poudre du matériau à base de silicium est comprise entre $0,6$ g/cm$^3$ et $1,2$ g/cm$^3$.

**6.** Le matériau à base de silicium selon l'une quelconque des revendications 1 à 5, dans lequel une masse volumique pressée de poudre du matériau à base de silicium est comprise entre $1,0$ g/cm$^3$ et $1,5$ g/cm$^3$.

**7.** Le matériau à base de silicium selon l'une quelconque des revendications 1 à 6, dans lequel la couche de revêtement est constituée d'au moins un parmi un matériau à base de carbone, un polymère organique, un métal et un oxyde métallique.

**8.** Le matériau à base de silicium selon l'une quelconque des revendications 1 à 7, dans lequel une épaisseur de la couche de revêtement est $\leq 30$ nm.

**9.** Batterie secondaire (5), comprenant le matériau à base de silicium selon l'une quelconque des revendications 1 à 8.

**10.** Module (4) de batterie, comprenant la batterie secondaire selon la revendication 9.

**11.** Bloc-batterie (1), comprenant le module (4) de batterie selon la revendication 10.

**12.** Appareil comprenant au moins un parmi la batterie secondaire (5) selon la revendication 9, le module (4) de batterie selon la revendication 10 et le bloc-batterie (1) selon la revendication 11.

**5**

FIG. 1

**5**

53

52
52
51

FIG. 2

FIG. 3

FIG. 4

FIG. 5

FIG. 6

FIG. 7

FIG. 8

**EP 4 075 548 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111710845 A

- US 2017346066 A1